(19) Europäisches Patentamt

European Patent Office

Office européen des brevets

(11) **EP 1 591 772 A1**

(12) **EUROPEAN PATENT APPLICATION**
published in accordance with Art. 158(3) EPC

(43) Date of publication:
02.11.2005 Bulletin 2005/44

(51) Int Cl.[7]: **G01N 21/64**, G01N 21/05

(21) Application number: 03785967.5

(22) Date of filing: 17.12.2003

(86) International application number:
**PCT/ES2003/000645**

(87) International publication number:
**WO 2004/055501 (01.07.2004 Gazette 2004/27)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **17.12.2002 ES 200202902**

(71) Applicant: **CONSEJO SUPERIOR DE INVESTIGACIONES CIENTIFICAS**
**28006 Madrid (ES)**

(72) Inventors:
• **Mastral Lamarca, Ana Maria, Insto. Carboquimica**
**50015 Zaragoza (ES)**
• **Garcia Martinez, Tomas, Insto. Carboquimica**
**50015 Zaragoza (ES)**
• **Galban Bernal, F. J., Universidad De Zaragoza**
**50005 Zaragoza (ES)**
• **Sanz Vicente, Isabel, Universidad De Zaragoza**
**50005 ZARAGOZA (ES)**

(74) Representative: **Ungria Lopez, Javier et al**
**Avda. Ramon y Cajal, 78**
**28043 Madrid (ES)**

(54) **METHOD FOR THE CONTINUOUS ANALYSIS OF POLYAROMATIC COMPOUNDS IN THE GAS PHASE AND AT A HIGH TEMPERATURE, AND DEVICE FOR PERFORMING SAME**

(57)    The invention relates to an analysis method employing fluorescence spectroscopy, which is used for the continuous identification and quantification of polyaromatic compounds in the gas phase and at high temperature. The invention comprises a specially-designed cell which is arranged such that the maximum fluorescence signal is obtained for a constant and stable flow of polyaromatics in the gas stream. The invention can be used in energy generation processes with a low concentration of polyaromatics and for a lower analysis cost than with standard gas/mass methods hitherto used, which do not operate continuously.

EP 1 591 772 A1

## EP 1 591 772 A1

### Description

#### SECTOR OF THE ART

The invention relates to a new analysis method for atmospheric organic contaminants by means of fluorescence spectroscopy at high temperature in the gas phase, and also to the device used for said analysis. More specifically, the invention relates to the continuous analysis of toxic organic contaminants, specifically polyaromatic compounds.

#### STATE OF THE ART

In recent years, environmental regulations have been ever more restrictive with regard to emissions of atmospheric contaminants emitted at low concentrations, such as trace metals and volatile organic compounds, yet which have a very negative environmental impact due to their toxicity.

So, regulations have led to a growing interest in toxic emissions, whose increase has been parallel with the rise of energy consumption, transport and electrical consumption, with the aim of achieving a quality of air which permits a lower impact on the health of citizens. In the case of toxic organic emissions, their carcinogenic, mutagenic and/or carcino/mutagenic nature has been demonstrated, yet enormous analytical difficulties hinder and delay the implementation of suitable techniques.

Among the greatest difficulties are found their detection and quantification, since they are emitted in very low concentrations, ppm and ppb, and the durability of their analysis, which only allows this to be done discontinuously (1-7). To this must be added a high cost per analysis.

The analytical technique currently used, coupled gas-mass systems (1,4), do not solve these limitations, nevertheless it is known that fluorescence spectroscopy (3,5,6,7) presents greater sensitivity, a greater specificity and a greater linear range, yet neither the method nor the device of this patent have so far been described for carrying out analysis of polyaromatic compounds in the gas phase, at high temperature and continuously.

#### BIBLIOGRAPHY

1. Luks-Betlej, K., Chromatographia 1997, 45, 243.
2. Qian, K., Hsu. C.S., Anal. Chem. 1992, 64, 2327.
3. Manoli, E., Samara, C., Chromatographia 1996, 43, (3/4)..
4. Wise, S.A., Schantz, M.M., Benner, B.A., Hays, M.J., Schiller, S.B., Anal. Chem. 1995, 67, 1171.
5. Murayama, M., Dasgupta, P.K., Anal. Chem. 1996, 68 (7), 1226.
6. Garcia, C., Pérez, J.L., Moreno, B., Anal. Chem. 1994, 66 (6), 874.
7. Kayali, M.N., Rubio-Barroso, S., Polo-Diéz, L.M., Journal of Chromatographic Science 1995, 33,181.

#### DESCRIPTION OF THE INVENTION

##### Brief description

The present invention describes a method for the continuous analysis of polyaromatic compounds at high temperature and in the gas phase by means of fluorescence spectroscopy comprising the following steps:

- Obtaining of excitation and emission spectra for each of the potential polyaromatic compounds to analyse.
- Selection of the wavelengths necessary for resolving the mixture.
- Calculation of the calibration constants relating the signal obtained in the spectrofluorimeter with the concentration of each polyaromatic.

And characterised in that the spectrofluorimeter is coupled to a specially designed device permitting the fluorescence signal for a constant and stable flow of polyaromatic compounds in the gas phase at high temperature to be a maximum. It is useful in energy generation processes, transport and combustion processes in general since it permits resolution of the analysis at very low concentrations and continuously.

**Detailed description**

The present invention is based on the fact that the inventors have observed that it is possible to identify and quantify polyaromatic compounds continuously, by means of fluorescence spectroscopy at high temperature and in the gas phase, using a specially designed device which, when coupled to the spectrofluorimeter, permits precise resolution and quantification under the conditions required for the analysis of emissions of polyaromatic compounds in energy generation processes.

So, an object of the present invention consists of an analytical method of continuous identification and quantification of polyaromatic compounds at high temperature and in the gas phase by means of fluorescence spectroscopy, characterised in that:

a) the fluorescence spectroscopy analysis is based on

a.1.- the obtaining of excitation and emission spectra for each of the potential polyaromatic compounds to analyse,
a.2.- the selection of the wavelengths necessary for the resolution of the mixture, complying with the following two requisites:

i) the quenching of the input filter has to be prevented; this involves choosing the wavelength in which the absorption of a polyaromatic compound does not coincide with the absorptions of the other compounds, and
ii) the fluorescence signal of each polyaromatic compound has to show the maximum sensitivity.

a.3.- the calculation of the calibration constants which relate the signal obtained by the spectrofluorimeter with the concentration of each polyaromatic compound, and

b) the spectrofluorimeter performing the measurements is coupled to a specially designed device permitting the fluorescence signal for a constant and stable flow of polyaromatic compounds, in the gas phase and at high temperature, to be a maximum.

As used in the present invention, the term "polyaromatic compounds" refers to polyaromatic compounds containing 2 to 5 aromatic rings in their structure, emitted in energy generation processes, transport and combustion processes in general, belonging to, among others, the following group of polyaromatic hydrocarbons prioritised by the USEPA, the United States Environmental Protection Agency, having carcinogenic activity: naphthalene, fluorene, phenanthrene, anthracene, fluoranthrene acenaphthene, acenaphthylene, chrysene, benzoperylene, benzo(k)fluoranthene, benzo(b)fluoranthene, benzoanthracene, indenopyrene, dibenzoanthracene, benzopyrene and pyrene. The term "polyaromatic compounds" in the present invention likewise extends to polyaromatic hydrocarbons, to complex mixtures thereof and polyaromatic compounds in general and likewise their corresponding nitrogenated, oxygenated and/or sulphur containing derivatives.

The term "at high temperature and in gas phase", as used in the present invention, refers to the analysis being conducted at the outlet temperature of the gases from the chimney or exhaust pipe.

The choice of wavelengths where the absorption of a polyaromatic compound does not coincide with the absorptions of others (i) requires knowing the wavelengths of each of the pure polyaromatic compounds. On the other hand, the use of the appropriate wavelength in each case will permit a fluorescence signal to be obtained for each polyaromatic signal with a maximum sensitivity (ii) in order to thereby avoid possible problems in quantification.

Once the wavelengths have been selected, the calibration constants relating the signal of the corresponding polyaromatic obtained in the spectrofluorimeter to its concentration can be obtained. In all the cases studied, the correlation coefficients were greater than 0.98. The calibration constants are a function of the polyaromatic compound being studied, of the selected wavelength and of the gas flow inside the device.

Under these experimental conditions used, the fluorescence intensity at each wavelength is found to be equal to the sum of the fluorescence intensities of each of the compounds, where their calibration constants are obtained from the pure compounds, in such a way that in a general case the following applies:

$$I^{\lambda 1} = K^{\lambda 1}_{HAP1} * C_{HAP1} + K^{\lambda 1}_{HAP2} * C_{HAP2} + \ldots\ldots\ldots\ldots + K^{\lambda 1}_{HAPn} * C_{HAPn}$$

$$I^{\lambda 2} = K^{\lambda 2}_{HAP1} * C_{HAP1} + K^{\lambda 2}_{HAP2} * C_{HAP2} + \ldots\ldots\ldots\ldots + K^{\lambda 2}_{HAPn} * C_{HAPn}$$

$$\ldots\ldots\ldots\ldots\ldots\ldots\ldots\ldots\ldots\ldots\ldots\ldots\ldots$$

$$\ldots\ldots\ldots\ldots\ldots\ldots\ldots\ldots\ldots\ldots\ldots\ldots\ldots$$

$$\ldots\ldots\ldots\ldots\ldots\ldots\ldots\ldots\ldots\ldots\ldots\ldots\ldots$$

$$I^{\lambda n} = K^{\lambda n}_{HAP1} * C_{HAP1} + K^{\lambda n}_{HAP2} * C_{HAP2} + \ldots\ldots\ldots\ldots + K^{\lambda n}_{HAPn} * C_{HAPn} \qquad (1)$$

Wherein:

$I^{\lambda i}$ is the intensity measured by the fluorescence detector at each of the wavelengths, $\lambda 1, \lambda 2, \lambda 3, \ldots\ldots\ldots \lambda n$.
$K^{\lambda i}HAPi$ is a proportionality constant obtained from the calibrations of the pure compounds for each wavelength and each flow of carrier gas.
$C_{HAP1}$ is the concentration of each HAP during the course of the experiment.

An additional object of the present invention consists of a device specially designed for performing the inventive method and which concerns a cell. Its construction was carried out with aluminium and has the shape of a parallelepiped with dimensions of 60 x 23 x 80 mm. It comprises two holes for the inlet and outlet of gases, two quartz windows located perpendicularly, which permit the measurement of the gas flow by fluorescence in the UV-visible range, and an electrical resistor permitting the heating of the cell to the desired temperature in the range 50-300 °C, or more preferably between 125-200 °C, with an accuracy of ± 1 °C. The temperature is measured with a thermocouple and controlled with a PID, which prevents undesired fluctuations that could affect the fluorescence signal.

The cell has an interior cavity in the shape of an L, made up of the joining of two parallelepipeds with dimensions 30 x 5 x 10 mm arranged in such a way that they create two windows located at an angle of 90° and which permit the fluorescence to be measured in the UV-visible range. The dimensions of the interior parallelepiped formed from the joining of the above two are 30 x 5 x 5 mm. Located in these windows are two quartz sheets (40 x 10) which are perfectly joined to the aluminium by means of using a high temperature glue (Araldite 7070). In this cell, the inlet and outlet of the hot gases was done by means of two holes of metric 3 located in the upper part of it and perpendicular to the interior cavity in the shape of an L.

The cell also has two other cylindrical holes located in its upper part. The first of metric 10 permits the inclusion of a bulb resistor of the same metric in order to heat the cell, and the second, of metric 3, in which a cylindrical thermocouple is arranged which permits us to monitor the temperature of the process.

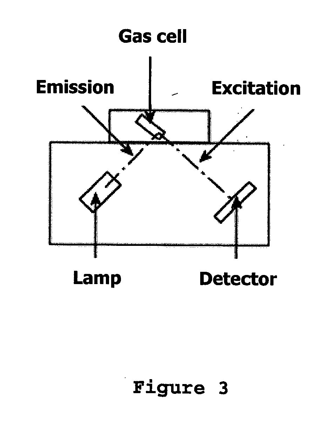

The cell is located in a commercial spectrofluorimeter (in our case, a Perkin-Elmer LS 50B) in such a way as to permit measurement of the fluorescence signal in an angle of 90°. So, the fluorescence signal for a continuous stream of fluorescent compound to be analysed would be a maximum (1 ppm of toluene); in other words, the length of the optical excitation and emission rays would be a maximum and perfectly aligned as can be seen in Figure 3.

Having achieved this position, the cell was permanently screwed to a metal base, which fitted with the design of the commercial spectrofluorimeter. The design of the pieces will vary depending on the commercial system used for measuring the fluorescence.

Having fixed the cell, the stream of gases to be quantified was brought up to the dish with the aid of ¼" steel tubes. These tubes were heat-insulated at the necessary temperature with the aid of various resistors so that they did not give any condensation problems and they were joined to the dish at its gas inlet hole by means of a ¼" thread.

Finally, in order to obtain the concentration of polyaromatic compounds present in the gas mixture, the data matrix of equation (1) is solved. The range of concentrations obtained is between 1 ppb and 100 ppm, depending on the pairs of wavelengths selected and/or the width of the slits of the excitation and emission monochromators of the measurement apparatus.

Both the method and the device solve the drawbacks of the conventional methods of the analysis in energy processes where the concentration of polyaromatics is low, permitting their detection and quantification directly at the outlet from the chimney/exhaust pipe.

It must nevertheless be understood that the invention is not limited to the required arrangements or instruments shown in it, which are merely a schematic representation of the product of the invention.

**BRIEF DESCRIPTION OF THE DRAWINGS**

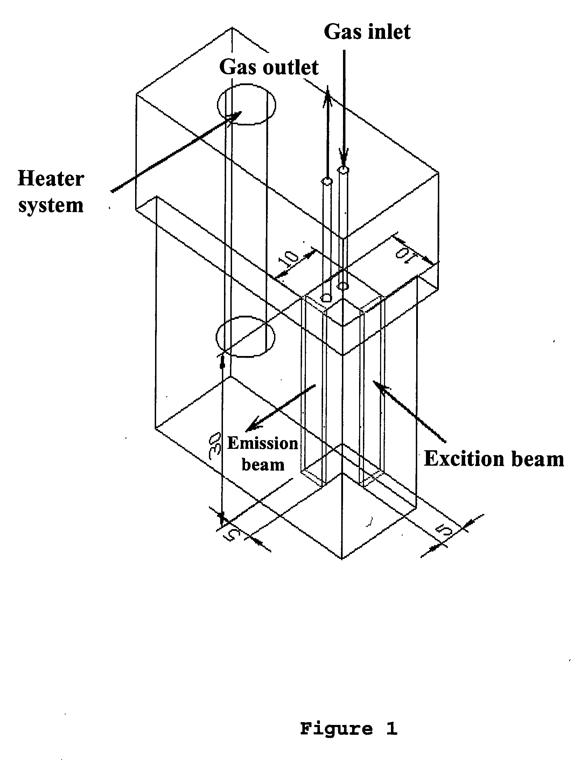

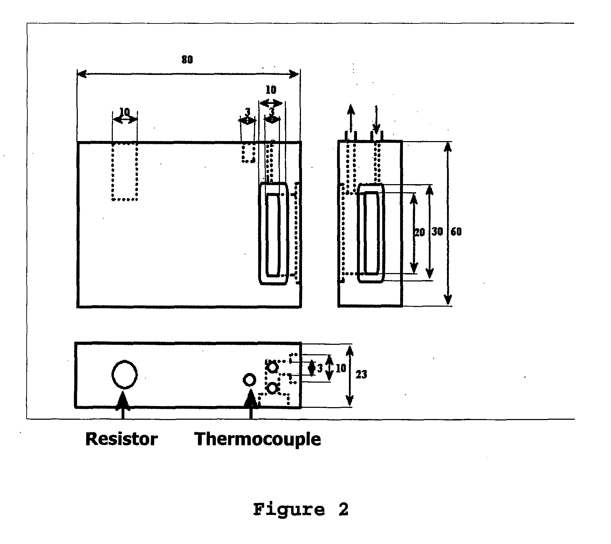

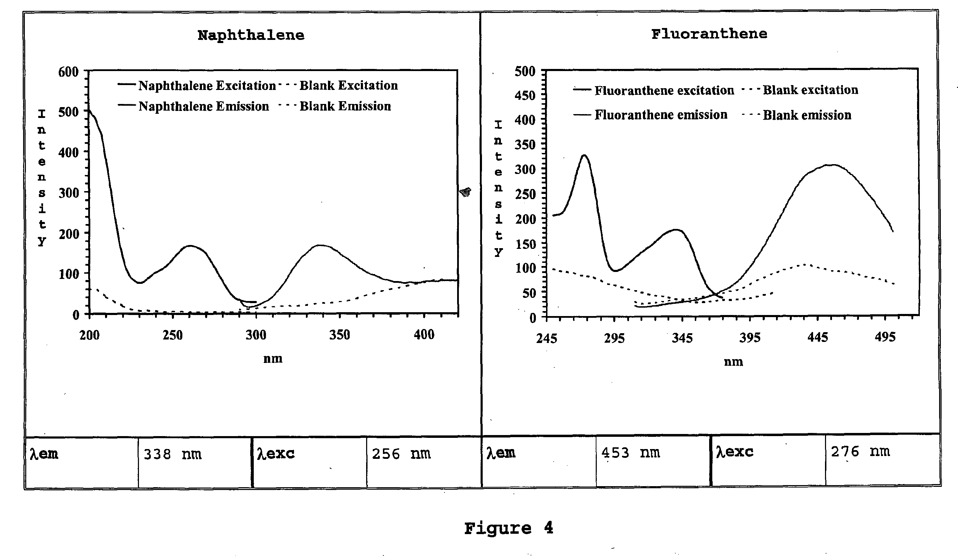

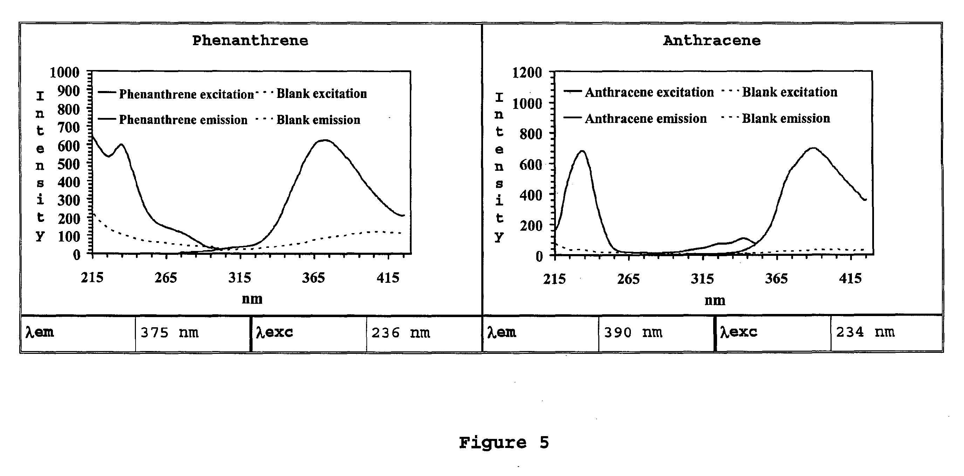

Figures 1, 2 and 3 show the design of the cell included in the patent and the way of locating it in the spectrofluorimeter such that the two quartz windows are positioned to form an angle of 90° for measuring the fluorescence in the UV-visible range. Figures 4 and 5 show the excitation and fluorescence spectra obtained for each of the compounds forming two binary mixtures. In one case the binary mixture analysed is Naphthalene (Np) and Fluoranthene (Fl) and in the other Anthracene (An) and Phenanthrene (Phe).

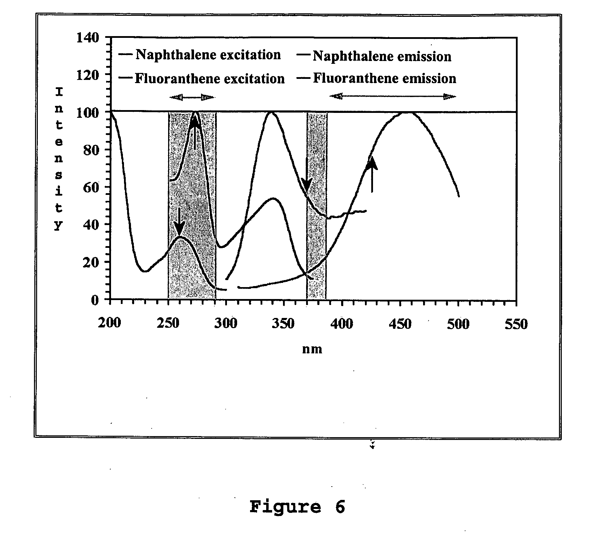

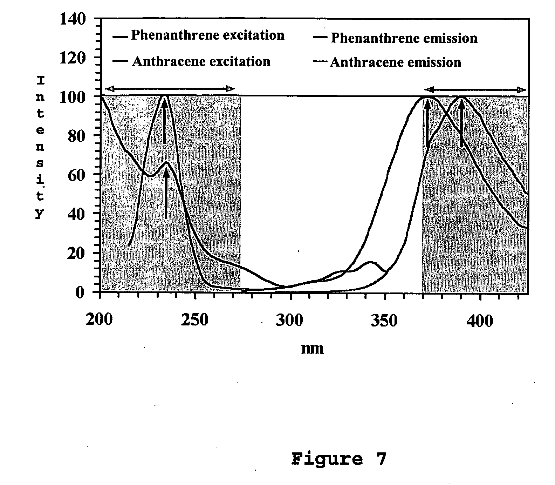

Figures 6 and 7 correspond to a schematic representation of the wavelength selection process for the resolution of rupture curves of two binary mixtures. One of the mixtures analysed is Naphthalene (Np) and Fluoranthene (F1) and the other is Anthracene (An) and Phenanthrene (Phe).

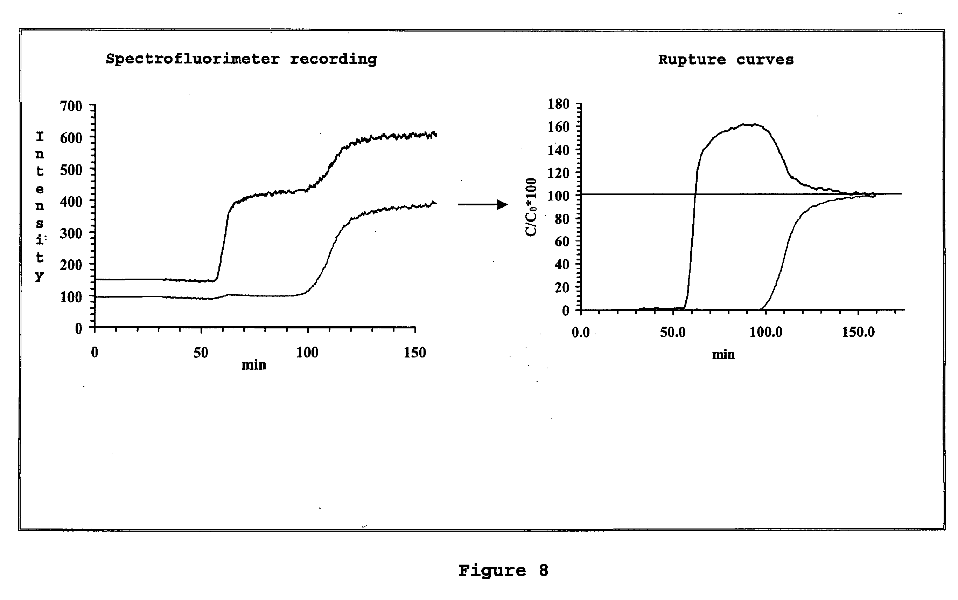

Figures 8 and 9 show the signals obtained in the spectrofluorimeter and the rupture curve obtained by application of the above equations and later normalisation of the data for the two binary mixtures, one of them Naphthalene (Np) and Fluoranthene (Fl) and the other Anthracene (An) and Phenanthrene (Phe).

**EXAMPLES OF EMBODIMENT**

**Example 1: Resolution of a mixture of Naphthalene and Fluoranthene**

The analysis procedure necessary for the resolution of a gaseous binary mixture of Naphthalene (Np) and Fluoranthene (F1) first of all commences with the obtaining of the excitation and fluorescence (emission) spectra for each of the compounds forming the binary mixture. These spectra are shown in Figure 4.

Once the spectra of both polyaromatic compounds have been obtained, the next step consists of selecting the wavelengths necessary for resolving the binary mixture. This choice of most suitable wavelengths for monitoring the binary rupture curves was done starting from the comparison of their excitation and emission spectra, in such way that two requisites would be complied with:

a) There is no quenching due to the inner filter effect of the compounds. To achieve this, wavelengths are taken in which the absorption spectrum of one compound does not coincide with the fluorescence of the other compound, thereby avoiding the phenomenon of energy transfer which gives rise to quenching due to the inner filter effect. In this way, it is ensured that the above equations permitting the binary rupture curves to be obtained are applicable on the basis of the calibration constants obtained for the pure compounds. Figure 6 shows the normalised fluorescence spectra of Np and Fl together with the process followed for the choice of most suitable wavelengths. In this figure, the suitable zones for monitoring the signals of each polyaromatic compound, and in which the quenching processes due to the inner filter effect are reduced, are shown in grey, either as a shaded area for the case of Np or as an area between arrows for the case of Fl.

b) That the fluorescence signal of each polyaromatic compound has the maximum sensitivity, so that there are no problems for the quantification of the fluorescence signals. In all binary mixtures, the final fluorescence signal corresponding to a concentration of ~ 0.8 ppm $\pm$ 0.1 ppm was greater than 10 times the standard deviation of the blank under those working conditions, which permitted the correct determination of the concentration of each polyaromatic compound in the mixture. Figure 6 shows the wavelengths chosen for the resolution of the Np and Fl mixture, which appear as arrows with the same colour as their respective spectra and correspond to the maximum value of intensity within the area where no quenching is produced due to the inner filter effect.

Once the experimental conditions in which the fluorescence recording is carried out have been known, the next step was to calculate the calibration constants which related the signal obtained in the spectrofluorimeter with the concentration of each polyaromatic compound. This determination was done using the pure compounds.

In order to carry out the calibration, the following two considerations were taken into account:

Table 1 also shows the value of the base line of the fluorescence recording at each wavelength. This value is due to the experimental design of the gas cell and is deducted from the values of total intensity obtained. The resulting absolute value is the one that is introduced into the above equations for the quantification of the mixture of polyaromatic compounds.

The absolute values of the calibration constants found for each polyaromatic compound depended on the pair of wavelengths chosen, though in all cases these values are sufficiently sensitive for permitting an adequate resolution of the fluorescence recording.

**Table 1 Selected wavelengths, calibration constants and** value of the base line obtained for resolution of a binary mixture of Np and Fl.

| Naphthalene Fluoranthene | A (nm) | | L$_{slits}$ (nm) | | I$_0$ (u.r.) | K$\lambda_{HAP}$[(u.r.}*min]/ μg | |
|---|---|---|---|---|---|---|---|
| | Exc | Em | Exc | Em | | Np | Fl |
| $\lambda_1$ | 260 | 370 | 15 | 20 | 54 | 1.4 | 0.10 |
| $\lambda_2$ | 275 | 425 | 15 | 20 | 22 | 0.10 | 1.6 |

On the basis of these calibration constants, a knowledge of the concentration of both polyaromatic compounds present in a binary mixture of gases can be achieved and they can therefore be applied to solving -different problems such as for example obtaining the rupture curves of a binary mixture of Np and Fl on activated carbon of high specific surface for the cleaning of HAP emissions. Figure 5 shows the fluorescence recording obtained for this mixture on activated carbon in which the initial concentration of both components is ~ 0.8 ppm.

The application of this analytical procedure to this and other binary mixtures of polyaromatic compounds on different carbon-containing materials permits it to be known in this case what are the different parameters of this process which controls the elimination of emissions of mixtures of polyaromatic compounds in contaminant systems by means of adsorption.

**Example 2: Resolution of a binary mixture of Anthracene and Phenanthrene**

In this case, we start with a gaseous binary mixture of Phenanthrene (Phe) and Anthracene (An), compounds of equal molecular weight and difficult to separate and quantify by means of other detection systems such as mass spectrometry. The obtaining of the normalised excitation and fluorescence spectra is shown in Figure 5.

Maintaining the same requisites as in the previous example, for the choice of the most suitable wavelengths, Figure 7 shows how, for the resolution of the binary mixture formed of Phe and An, the selected areas are represented as two shaded grey areas in the case of Phe and as two areas between grey arrows for An.

Within these wavelength intervals, those presenting greater sensitivity and, therefore, which are more suitable for resolving a binary mixture of Phe and An, are marked by means of arrows.

Once the experimental conditions in which the fluorescence recording is carried out have been known, the next step was to calculate the calibration constants which related the signal obtained in the spectrofluorimeter with the concentration of each polyaromatic compound. This determination was done using the pure compounds.

In order to carry out the calibration, it was borne in mind that the value of the base line of the fluorescence recording at each wavelength shown in Table 2 is due to the experimental design of the gas cell and is therefore deducted from the values of total intensity obtained. The resulting absolute value is the one that is introduced into the above equations for quantification of the mixture of polyaromatic compounds.

The absolute values of the calibration constants that are found for each polyaromatic compound depended on the pair of wavelengths chosen, though in all cases these values are sufficiently sensitive for permitting an adequate resolution of the fluorescence recording.

Table 2

| Selected wavelengths, calibration constants and value of the base line obtained for resolution of a binary mixture of Phe and An. | | | | | | | |
|---|---|---|---|---|---|---|---|
| Phenanthrene Anthracene | λ(nm) | | L$_{silts}$ (nm) | | I$_0$ (u.r.) | K$\lambda_{HAP}$ [(u.r.)*min]/ μg | |
| | Exc | Em | Exc | Em | | Phe | An |
| $\lambda_1$ | 235 | 370 | 15 | 20 | 72 | 6 | 12 |
| $\lambda_2$ | 235 | 390 | 15 | 20 | 23 | 4 | 15 |

On the basis of these calibration constants, a knowledge of the concentration of both polyaromatic compounds present in a binary mixture of gases can be achieved and they can therefore be applied to solving different problems such as for example obtaining the rupture curves of a binary mixture of Phe and An on activated carbon of high specific surface for the cleaning of polyaromatic compound emissions. Figure 9 shows the fluorescence recording obtained for this mixture on activated carbon in which the initial concentration of both components is ~ 0.8 ppm.

This analytical procedure not only permits the behaviour shown by binary mixtures (multiple of a general case) of fluorescent compounds during their adsorption on different adsorbents to be learned, but also, continuous experimental data can be obtained of an adsorption process of multiple mixtures whose resolution is experimentally very difficult.

**Claims**

1. Method of continuous identification and quantification of polyaromatic compounds in the gas phase and at high temperature, emitted in energy generation processes by means of fluorescence spectroscopy, **characterised in that** the analysis is based on the following steps:

    i) obtaining of excitation and emission spectra for each of the potential polyaromatic compounds to be identified and quantified,
    ii) selection of the wavelengths necessary for the resolution of the mixture, complying with the following two requisites:

    - preventing the quenching of the input filter; this implies choosing the wavelengths which the absorption of a polyaromatic compound does not coincide with the absorptions of the other compounds. For this it is necessary to know the wavelengths of the pure compounds.
    - The fluorescence signal of each polyaromatic compound must show the maximum sensitivity in order to thereby be able to avoid possible problems in the quantification.

    iii) calculation of the calibration constants which relate the signal obtained by the spectrofluorimeter with the concentration of each polyaromatic compound.

2. Method according to claim 1, furthermore **characterised in that** the spectroscopy analysis is carried out with a specially designed cell coupled to the commercial spectrofluorimeter in such a way that permits the fluorescence signal for a constant and stable flow of polyaromatic compounds, in the gas phase and at high temperature, to be a maximum.

3. Method according to claims 1 and 2, **characterised in that** the identified and quantified polyaromatic compounds contain two to five aromatic rings and belong to, among others, the following group: naphthalene, fluorene, phenanthrene, anthracene, fluoranthrene acenaphthene, acenaphthylene, chrysene, benzoperylene, benzo(k)fluoranthene, benzo(b)fluoranthene, benzoanthracene, indenopyrene, dibenzoanthracene, benzopyrene and pyrene, likewise their corresponding nitrogenated, oxygenated and/or sulphur containing derivatives.

4. Method according to claims 1 and 2, **characterised in that** it permits polyaromatic compounds according to claim 3 to be identified and quantified in complex mixtures.

5. Method according to claims 1 to 4, **characterised in that** it is done at high temperature, between temperature margins of 50-300 °C, or more preferably between 125-200 °C.

6. Method according to claims 1 to 4, **characterised by** its high specificity for the identification and quantification of fluorescent compounds in very low concentrations, between 1 ppb and 100 ppm, compared to discontinuous coupled systems of gas chromatography /mass spectroscopy.

7. Cell according to claim 2, necessary for carrying out the method according to any of claims 1 to 6, **characterised in that** it comprises:

    - two holes permitting entrance and exit of the gases to analyse
    - two perpendicular quartz windows permitting measurement of the gas flow by fluorescence in the UV-visible range, and
    - an electrical resistor permitting heating of the cell to the desired temperature with an accuracy of ± 1 °C, as shown schematically in Figures 1, 2 and 3.

Figure 1

**Resistor    Thermocouple**

Figure 2

**Figure 3**

**Naphthalene**

| λem | 338 nm | λexc | 256 nm |
|-----|--------|------|--------|

**Fluoranthene**

| λem | 453 nm | λexc | 276 nm |
|-----|--------|------|--------|

Figure 4

Figure 5

EP 1 591 772 A1

Figure 6

Figure 7

Figure 8

15

# EP 1 591 772 A1

| INTERNATIONAL SEARCH REPORT | International application No. |
|---|---|
| | PCT/ ES 2003/000645 |

**A. CLASSIFICATION OF SUBJECT MATTER**

IPC$^7$ G01N 21/64, 21/05
According to International Patent Classification (IPC) or to both national classification and IPC

**B. FIELDS SEARCHED**

Minimum documentation searched (classification system followed by classification symbols)

IPC$^7$ G01N

Documentation searched other than minimum documentation to the extent that such documents are included in the fields searched

Electronic data base consulted during the international search (name of data base and, where practicable, search terms used)

WPI, EPODOC, BIOSIS, XPESP

**C. DOCUMENTS CONSIDERED TO BE RELEVANT**

| Category* | Citation of document, with indication, where appropriate, of the relevant passages | Relevant to claim No. |
|---|---|---|
| X | US 5425916 A (BEER, J. M. et al.) 20.06.1995, the whole document. | 1-6 |
| Y | | 7 |
| Y | US 5721613 A (LINOWSKI, C. & DOERR, T.) 24.02.1998; column 9, line 27-column 10, line 23, Drawings 3a and 3c. | 7 |
| A | US 5880830 A (SCHECHTER, I.) 09.03.1999, the whole document. | 1-7 |
| A | JP 2002-168789 A (INAGA TAKASHI FURUNO ELECTRIC CO. LTD.) 14.06.2002, the whole document. [ in line ] [ recovered on 24.03.2004]. recovered from the Internet: <http://www4.ipdl.jpo.go.jp/cgi-bin/tran_web_cgi_ejje> | 1-7 |
| A | MASTRAL, A. M. et al. Analytical determination of Polycyclic Aromatic Hydrocarbons in gases from coal conversion by Synchronous-Fluorescence-Spectrometry. Analytical Letters, 1995, Vol. 28, N°10, páginas 1883-1895. | 1-7 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 March 2004 (25.03.04)** | **30 April 2004 (30.04.04)** |

| Name and mailing address of the ISA/ **S.P.T.O** | Authorized officer |
|---|---|
| C/Panamá 1, 28071 Madrid, España. | G. Esteban García |
| Facsimile No. N° de fax 34 91 3495304 | Telephone No. + 34 91 3493048 |

Form PCT/ISA/210 (second sheet) (July 1992)

**EP 1 591 772 A1**

<table>
<tr><td colspan="2" align="center">**INTERNATIONAL SEARCH REPORT**</td><td>International application No.<br><br>PCT/ ES 2003/000645</td></tr>
<tr><td colspan="3">C (Continuation).    DOCUMENTS CONSIDERED TO BE RELEVANT</td></tr>
<tr><td>Category*</td><td>Citation of document, with indication, where appropriate, of the relevant passages</td><td>Relevant to claim No.</td></tr>
<tr><td align="center">A</td><td>CULLUM, B. M. et al. High-Temperature Fluorescence Measurements and Instrumentation for Polyaromatic Hydrocarbons (PAH): A Review. Polycyclic Aromatic Compounds, 2000, Vol. 18,   pages   25-47.</td><td></td></tr>
</table>

Form PCT/ISA/210 (continuation of second sheet) (July 1992)

17

## INTERNATIONAL SEARCH REPORT
Information on patent family members

International Application No

PCT/ES 2003/000645

| Patent document cited in search report | Publication date | Patent familiy member(s) | Publication date |
|---|---|---|---|
| US 5425916 A | 20.06.1995 | WO 1992/006360 A<br>US 5206176 A<br>EP 0573428 A1<br>JP 6501773 T | 16.04.1992<br>27.04.1993<br>15.12.1993<br>24.02.1994 |
| US 5721613 A | 24.02.1998 | EP 0674160 A1<br>JP 7280732 A | 27.09.1995<br>27.10.1995 |
| US 5880830 A | 09.03.1999 | WO 1998033058 A1<br>AU 6131398 A<br>EP 0956497 A1<br>IL 123017 A | 30.07.1998<br>18.08.1998<br>17.11.1999<br>16.07.2000 |
| JP 2002-168789 A | 14.06.2002 | **NONE** | |

Form PCT/ISA/210 (patent family annex) (July 1992)